# FASCICULE DE BREVET EUROPEEN

(11) **EP 1 953 898 B1**
(45) Date de publication et mention de la délivrance du brevet: **16.01.2019**
(21) Numéro de dépôt: 08150907.7
(22) Date de dépôt: 31.01.2008
(51) Int. Cl.: H02K 7/08, H02K 11/22, H02K 1/27, F16C 41/00, F16C 19/36, F16C 19/38

(54) **Couronne d'orientation à moteur de rotation intégré**
Orientierungskranz mit integriertem Rotationsmotor
Slewing ring with built-in rotation motor

(30) Priorité: 31.01.2007 FR 0700682
(43) Date de publication de la demande: 06.08.2008
(73) Titulaire: Defontaine, 85530 La Bruffière (FR)
(72) Inventeur: Jardin, Laurent, 44330, La Chapelle Heulin (FR); Jacquemont, Eric, 44190, Clisson (FR)
(74) Mandataire: Novagraaf Technologies

(56) Documents cités:
- EP-A- 0 245 590
- EP-A- 0 402 240
- DE-A1- 3 213 172
- JP-A- 363 213 457
- US-A- 4 465 951
- US-A1- 2002 153 785

## Description

L'invention concerne une couronne d'orientation à moteur de rotation intégré, comprenant deux bagues montées en rotation l'une par rapport à l'autre par l'intermédiaire d'éléments roulants disposés annulairement autour de l'axe de rotation de la couronne, et un moteur de rotation comprenant une partie de stator fixée à l'une des bagues, qui est fixe, et une partie de rotor fixée à l'autre bague, qui est rotative.

A partir de US 2002/0153785, il est connu que la bague rotative puisse présenter au moins une première zone périphérique usinée définissant un chemin de roulement pour des éléments roulants, une seconde zone périphérique usinée recevant un support de moyens de repérage de la position angulaire de la bague rotative par rapport à la bague fixe, lesdits moyens étant adaptés à coopérer avec des moyens de repérage complémentaires portés par la bague fixe, la seconde zone périphérique étant agencée de façon telle qu'elle définit un support pour une bande de repérage de position qui est fixée à ladite seconde zone.

Le dispositif de US 2002/0153785 peut poser des problèmes de précision de mesure. Le capteur est loin du roulement, ce qui augmente les battements radiaux et est ainsi défavorable à la précision.

Le document JP 363 213 457 décrit une couronne d'orientation à moteur intégré comprenant des bandes de repérage disposées face à une bague, mais cette disposition est encombrante et n'est pas toujours très fiable.

Notamment pour éviter ces difficultés, il est ici proposé que la bande de repérage soit disposée axialement adjacente des éléments roulants (donc du ou des chemins de roulement prévu (s) pour eux) et que la bande de repérage est disposée de façon telle que sa surface périphérique en regard du capteur de position a un rayon sensiblement égal au rayon moyen des éléments roulants. On obtient ainsi une précision de positionnement de la bague rotative qui est le moins possible perturbée par d'éventuelles déformations de la couronne en fonctionnement

Dans la présente solution préférée, il est conseillé que :
- la bague rotative présente une troisième zone périphérique usinée agencée de manière telle qu'elle définit un support pour des aimants appartenant à la partie de rotor du moteur et qui sont fixés directement sur cette troisième zone,
- et/ou que la bande précitée de repérage de position soit fixée directement sur ladite seconde zone.

Dans US 4,465,951 destiné à un satellite de communication, le dispositif, prévu pour entraîner avec un couple moteur très faible un rotor qui tourne à vitesse sensiblement constante, n'est pas adapté aux conditions sévères habituelles d'utilisation des couronnes d'orientation à moteur de rotation intégré, pour lesquelles, comme par exemple dans le cas de robots, il faut supporter des variations importantes de vitesse, dans un sens ou dans l'autre, ainsi que des efforts mécaniques importants résultant des charges, axiales ou radiales, et des couples de renversement transmis d'une bague à l'autre d'une telle couronne.

En prévoyant, comme indiqué ci-dessus:
- que la seconde zone périphérique de la bague rotative définisse un support pour une bande de repérage de position fixée directement sur cette seconde zone,
- et que la troisième zone périphérique définisse un support pour les aimants qui sont fixés directement sur cette troisième zone, les trois zones périphériques pourront être usinées sur la même machine. On obtiendra alors une concentricité optimale entre le support de la bande de repérage de position angulaire, le support des aimants et la portée des éléments roulants, en supprimant tout risque d'addition de tolérances d'usinage et d'assemblage existant dans les dispositifs précédents.

Globalement, les solutions qui sont ici présentées permettent de remédier aux inconvénients des dispositifs connus, et de proposer une couronne d'orientation de structure simple et légère présentant un encombrement limité en direction axiale comme en direction radiale, tout en permettant de répondre à tous les besoins des utilisateurs en matière de variation de la vitesse de rotation, résistance aux déformations sous charge, et en présentant des caractéristiques excellentes en matière de précision de positionnement et de reproductivité de ces positionnements dans le temps.

Dans ce contexte, ces solutions ont pris en compte les considérations ou problèmes suivants :
- asservissement précis en couple ou en position entre les deux bagues à entraîner ou positionner, l'une par rapport à l'autre,
- entraînement en rotation de la bague mobile avec une grande rigidité tant statique que dynamique,
- adaptation d'une vitesse continue variable, en particulier à très basse vitesse ou en position fixe,
- précision des mouvements de rotation permettant, le cas échéant, une répétitivité de positions dans le temps, par exemple pour un robot,
- réalisation d'un moteur couple à grande rigidité axiale, avec un jeu en rotation quasi inexistant,
- possibilité pour la couronne de supporter des charges importantes, tout en assurant un positionnement ou un déplacement relatif entre les pièces particulièrement précis,
- diminution du poids de l'encombrement et du prix de revient.

On notera que les pratiques habituelles dans l'industrie, sont typiquement telles que les éléments de rotor et de stator du moteur sont réalisés et assemblés chez le motoriste, qui est seul responsable des caractéristiques électriques et mécaniques de ses assemblages, et sont expédiés chez le constructeur de la couronne d'orientation, qui est un mécanicien capable de maîtriser uniquement des tolérances d'usinage et d'assemblage entre elles de diverses pièces mécaniques.

Le fait d'usiner les trois zones périphériques précitées sur la même machine favorisera une excellente concentricité, ce qui a un effet positif à la fois sur la précision et la répétitivité des positions angulaires, et sur la précision de réalisation de l'entrefer entre les éléments de stator et les éléments du rotor du moteur de rotation.

Par ailleurs, dans DE 3 213 172, l'utilisation de roulements sphériques à billes est considérée comme la solution la plus appropriée sur des dispositifs supportant de fortes charges, telles que des tourelles de chars d'assaut, en ce que ceci permet d'éviter des problèmes de moments d'inertie. Toutefois des paliers lisses sont nécessaires pour éviter les vibrations.

Quant à la solution de EP 402 240, elle est présentée comme évitant les problèmes de variation de l'entrefer du moteur rencontrés avec une disposition en porte-à-faux de ce moteur.

Au contraire il est ici conseillé que la bande de repérage de position angulaire soit située axialement d'un côté des éléments roulants (donc de la (des) rangée(s) qu'ils constituent favorablement), les aimants du rotor étant disposés de l'autre côté de ces éléments, donc à nouveau de leur(s) rangée(s), celles-ci étant considérées ensemble s'il y a plusieurs rangées.

De préférence, au moins dans le cas d'une rangée unique, on conseille que les éléments roulants comprennent des rouleaux à contact oblique disposés alternativement suivant des directions d'inclinaison sensiblement opposées par rapport à la direction de l'axe de la couronne.

Ceci est contraire à l'enseignement de l'art antérieur selon lequel une rangée unique d'éléments roulants sans moyens complémentaires de maintien de la bague rotative rigoureusement dans l'axe de la bague fixe ne peut pas constituer une solution satisfaisante pour faire face aux conditions exigeantes d'utilisation des couronnes d'orientation.

Utiliser une seule couronne à rangée unique d'éléments roulants, disposés donc favorablement obliquement alternativement vers l'intérieur et vers l'extérieur de la couronne, permet d'éviter d'avoir recours à deux couronnes décalées axialement (axe 3) suivant deux rayons différents par rapport à l'axe de rotation de la couronne d'orientation, comme dans EP 402 240 où le coût de réalisation de la couronne est a priori plus élevé, tout en améliorant, dans certains cas, les conditions de fonctionnement des couronnes d'orientation connues, tant en termes de stabilité et précision d'entraînement ou de positionnement, que de fiabilité et de performance du moteur en lui-même.

Selon encore d'autres caractéristiques intéressantes de l'invention:
- les parties de rotor et de stator du moteur de rotation présentent une direction d'allongement parallèle à l'axe de la couronne, et les enroulements de la partie de stator sont disposés suivant un rayon moyen proche de celui des éléments roulants de la couronne d'orientation. A l'image de la disposition de la bande de repérage à proximité immédiate de la (des) rangée(s) d'éléments roulants, de telles dispositions optimisent la précision de l'entraînement en rotation et/ou le positionnement relatif entre les pièces.

Selon une autre caractéristique intéressante, la couronne comprend en outre un bâti structurel sur lequel sont fixées respectivement la partie de stator du moteur et la bague fixe, ce bâti structurel comportant avantageusement un circuit de refroidissement adapté à recevoir un fluide de refroidissement, et étant de préférence réalisé en un métal ou alliage bon conducteur de la chaleur.

En outre, on conseille que la bague dite rotative, à laquelle est donc fixée la partie de rotor, porte un disque de frein adapté à coopérer avec des mâchoires de frein portées par la bague fixe.

On va ainsi pouvoir assurer un fonctionnement optimisé du moteur, en particulier en liaison avec la présence d'aimants sur la partie de rotor et de bobines sur la partie de stator.

Ceci permet aussi d'apporter une solution de contrôle efficace de la température de fonctionnement, avec une solution compacte et à coût maîtrisé. La maîtrise de la température doit en particulier permettre d'obtenir une augmentation de la puissance disponible du moteur.

Favorablement le bâti structurel sera réalisé en un alliage léger présentant un coefficient de conduction thermique supérieur à celui de l'acier.

Une description encore plus détaillée d'un mode préféré de réalisation va maintenant être fournie en liaison avec des dessins illustratifs donnés à titre d'exemples non limitatifs et dans lesquels :
- la figure 1 correspond, à gauche, à une demi-vue en coupe diamétrale, et à droite à une demi-vue extérieure de face, d'une couronne d'orientation selon un mode de réalisation de la présente invention ;
- la figure 2 est une vue en perspective de la bague rotative du mode de réalisation de la figure 1, avec les éléments roulants mais sans les aimants.
- la figure 3 une vue agrandie, partiellement éclatée, de la bague rotative de la figure 2, portant les éléments roulants, les aimants et la bande de repérage de position,
- la figure 4 est une demi-vue en coupe axiale agrandie de la bague rotative de la figure 2, les éléments roulants ayant été retirés pour la clarté de la figure ;
- et la figure 5 est une coupe diamétrale complète d'une alternative de réalisation de la demi-vue de gauche de la figure 1, la figure 6 étant un agrandissement local de l'illustration de figure 5.

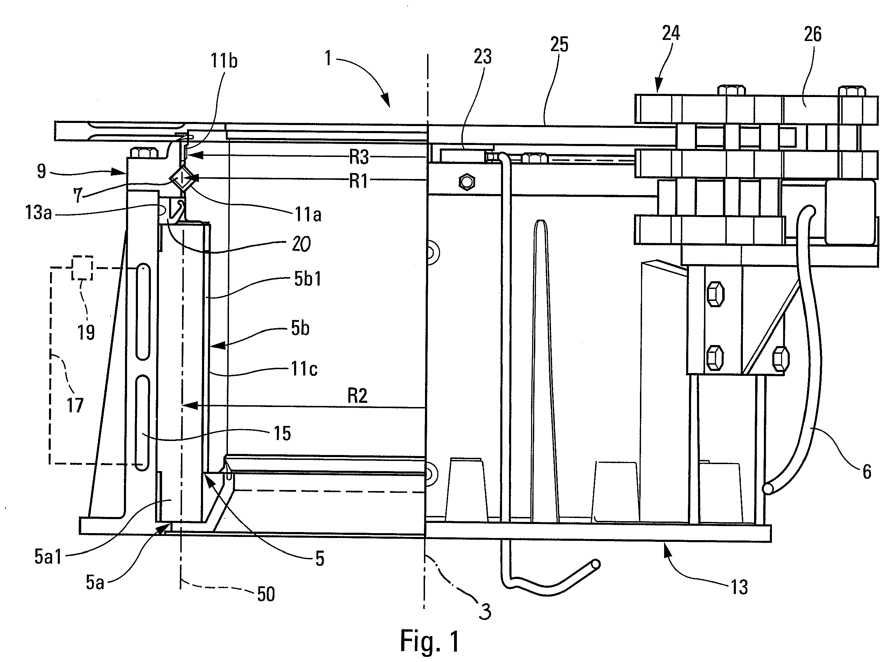

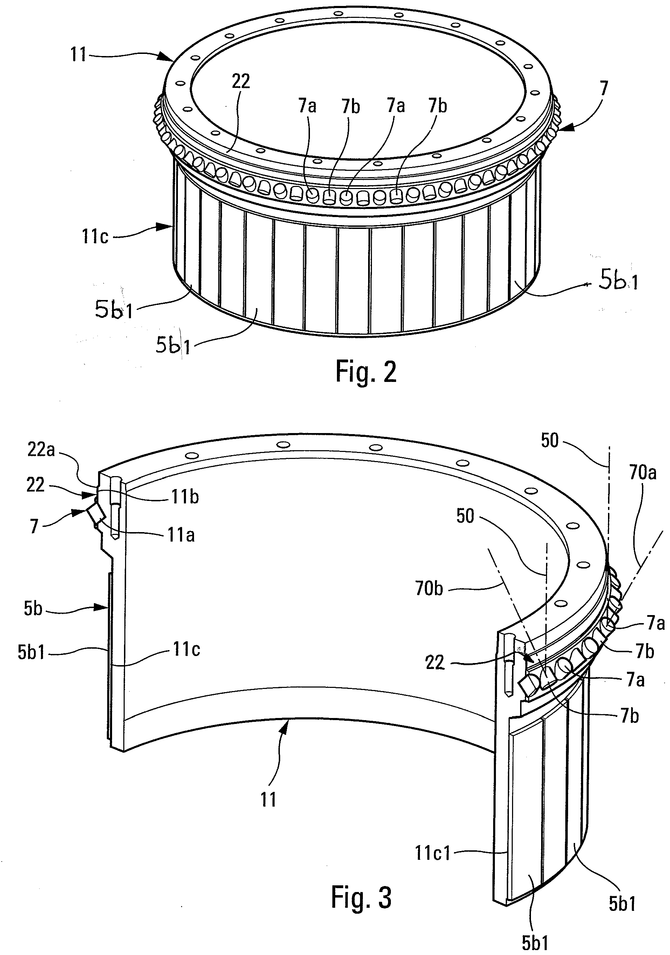

Figures 1 et 2, le repère 1 correspond donc à une couronne d'orientation à moteur intégré conforme à l'invention.

Cette couronne d'orientation présente un axe principal de rotation 3 autour duquel tourne la bague rotative avec les éléments roulants 7 et la partie mobile du moteur électrique 5 dont cette couronne d'orientation est équipée.

Dans l'exemple décrit ci-dessous et représenté aux figures, la bague rotative 11 est la bague intérieure qui présente, sur sa surface périphérique extérieure, au moins une première zone périphérique usinée 11a définissant un chemin de roulement pour des éléments roulants 7, une seconde zone périphérique 11b agencée de façon telle qu'elle définit un support pour une bande de repérage de position angulaire 22 qui est fixée directement sur cette seconde zone 11b, et une troisième zone périphérique 11c qui est agencée de manière telle qu'elle définit un support pour les aimants 5b qui sont fixés directement sur cette troisième zone 11c de la bague.

La bague fixe 9 est la bague extérieure qui est fixée sur un bâti structurel 13 (voir plus loin).

Il est bien entendu que l'invention et toutes ses caractéristiques concernent de la même manière une couronne d'orientation dont la bague fixe serait la bague intérieure, solidaire des éléments de stator du moteur, la bague extérieure étant la bague rotative portant sur sa surface périphérique intérieure les trois zones périphériques usinées précitées (mode de réalisation non représenté).

Le moteur décrit dans l'exemple ci-dessous est un moteur couple classique sans balai comportant un rotor portant des barreaux aimantés et un stator comportant des enroulements parcourus par un courant électrique pour créer un champ magnétique, d'une façon classique connue qu'il est inutile de décrire en détail ci-dessous. Ce champ magnétique permet de résister à une rotation autour de l'axe 3, ou au contraire d'autoriser le déplacement souhaité en rotation de l'une des bagues à positionner ou à entraîner par rapport à l'autre, jusqu'à assurer le positionnement relatif recherché.

Le moteur électrique 5 comprend une partie de stator 5a et une partie de rotor 5b.

Ces deux parties de rotor et de stator forment deux structures annulaires disposées concentriquement autour de l'axe central de rotation 3, avec la partie de stator 5a autour de la partie de rotor 5b.

La partie de rotor comprend une succession de barreaux aimantés 5b1 (figure 1), montés tournants en face et à l'intérieur de bobines 5a1 (figure 1), appartenant à la partie de stator 5a.

En 6, figure 1, on voit le câblage d'alimentation électrique des bobines du stator 5a.

La surface périphérique extérieure de la troisième zone périphérique 11c de la bague rotative 11 est usinée de façon à permettre un positionnement très précis des aimants 5b1.

Dans l'exemple représenté, correspondant au cas où les aimants ont une face d'intrados plane à fixer sur cette surface périphérique, cette dernière peut être usinée de manière à présenter une succession de facettes planes 11c1, à raison d'une facette par aimant. Chaque facette est évidemment située dans un plan parallèle à l'axe 3 de la couronne et tangent extérieurement à un cylindre ayant pour axe l'axe 3 et pour rayon la plus courte distance, identique pour toutes les facettes et donc pour tous les aimants, entre l'axe 3 et chaque facette : les aimants se trouvent ainsi tous à la même distance de l'axe 3, et sont fixés chacun sur la facette correspondante d'une manière connue quelconque, par exemple par collage.

D'autres formes de réalisation de cette surface périphérique sont possibles et peuvent être choisis par l'homme du métier en fonction des conditions d'exploitation et/ou de construction prévues pour la couronne

De façon comparable, les bobines 5a1 du stator 5a sont fixées (en dessous du joint 20), d'une manière connue quelconque, sur la surface périphérique intérieure 13a, qui est usinée en conséquence, du bâti structurel 13 sur lequel est fixée la bague extérieure fixe 9. Dans le présent exemple, la bague 9 a une hauteur en direction axiale sensiblement juste suffisante pour constituer par sa surface périphérique intérieure la piste extérieure des éléments roulants 7.

Dans l'exemple représenté, les éléments roulants 7 sont disposés suivant une seule rangée.

La bande 22 de repérage de position angulaire est alors située axialement d'un côté, au-dessus aux figures, de cette rangée d'éléments roulants 7, les aimants 5b1 du rotor 5b étant disposés de l'autre côté, au-dessous aux figures, de la dite rangée.

Les éléments roulants comprennent dans cet exemple des rouleaux à contact oblique 7a, 7b disposés alternativement, dans un plan radial correspondant, suivant des directions d'inclinaison respectives de leur axe 70a, 70b, sensiblement opposées par rapport à la direction 50 de l'axe de rotation 3 de la couronne 1. Ainsi, à la figure 3, on a représenté, pour un rouleau 7b, un demi-axe 70b dirigé vers le haut et vers l'intérieur par rapport à la direction 50. De même, on a représenté, pour un rouleau 7a, un demi-axe 70 a dirigé vers le haut et vers l'extérieur par rapport à la direction 50. Les angles faits, dans le plan radial correspondant, entre la direction 50 et le demi-axe 70a d'une part, le demi-axe 70b, d'autre part, ont évidemment même valeur absolue mais des sens opposés.

Un tel ensemble de rouleaux d'inclinaisons opposées alternées est connu en soi et n'a pas besoin d'être décrit en détail.

En général, le couple d'entraînement exigé par l'utilisateur d'une couronne d'orientation à moteur intégré de ce type impose pour cette couronne un diamètre minimum relativement important.

Le nombre d'éléments roulants requis pour une couronne d'un tel diamètre est alors tel que cette couronne est capable de supporter des efforts et des moments qui sont le plus souvent très supérieurs aux efforts et moments qu'elle doit réellement supporter.

L'homme du métier sait alors choisir le type (forme, dimensions) et le nombre d'éléments roulants correspondant au mieux aux conditions d'utilisations prévues.

De façon connue, les parties de rotor 5b et de stator 5a du moteur 5 présentent une direction d'allongement parallèle à l'axe 3 de rotation de la couronne. Elle présente suivant cette direction une longueur calculée pour obtenir du moteur 5 la puissance nécessaire pour respecter les caractéristiques techniques requises pour une utilisation prédéterminée de la couronne.

Les rouleaux 7a, 7b étant disposés selon un rayon moyen R1 autour de l'axe 3 de rotation de la couronne, les bobines 5a1 sont disposées selon un rayon moyen R2 proche du rayon R1, tandis que les aimants 5b1 sont disposés de manière à ménager, lorsque la couronne est immobile, un entrefer prédéterminé (non représenté) en fonction des conditions d'exploitation prévues de la couronne.

Cette disposition permet d'obtenir un champ magnétique dirigé tangentiellement selon un rayon moyen proche de R1.

La seconde zone périphérique usinée 11b est usinée de manière telle que la bande de repérage de position 22, qui est une bande classique connue, est disposée à proximité immédiate de la rangée des rouleaux 7a, 7b, de façon telle que sa surface périphérique extérieure 22a, qui fait face au capteur de position 23, a un rayon R3 sensiblement égal au rayon moyen R1 des rouleaux 7a, 7b.

On obtient ainsi une précision de positionnement de la bague rotative 11 qui est le moins possible perturbée par d'éventuelles déformations de la couronne en fonctionnement.

La bande de repérage de position 22 est une bande connue, par exemple magnétique ou optique. Le capteur de position 23 est un capteur connu adapté à coopérer avec la bande 22 pour obtenir la précision requise de positionnement de la bague rotative 11 par rapport à la bague fixe 9.

Comme schématisé à la figure 1, la couronne 1 comprend un bâti structurel 13 sur lequel sont fixées la bague fixe 9 et les bobines 5a1 du stator 5a.

Le bâti structurel 13 comporte avantageusement un circuit interne de refroidissement, schématisé en 15, adapté à recevoir un fluide de refroidissement, par exemple de l'eau, circulant dans un circuit de refroidissement extérieur, schématisé en 17 et comportant un échangeur, schématisé en 19 : un tel circuit permet d'évacuer la chaleur produite par le courant électrique circulant dans les bobines 5a1 et d'améliorer ainsi les performances du moteur 5.

Le bâti structurel 13 est avantageusement réalisé en un métal ou alliage bon conducteur de la chaleur, par exemple en aluminium ou en alliage d'aluminium, de manière à faciliter le transfert de chaleur entre les bobines 5a1 et le fluide de refroidissement circulant dans le circuit 15.

La couronne 1 comporte avantageusement un frein 24, par exemple un frein électromagnétique, notamment un frein électromagnétique à déclenchement par perte d'énergie, capable d'exercer un couple de maintien en position important et d'assurer la sécurité du système en cas de coupure accidentelle de l'alimentation.

Comme schématisé à la figure 1, la bague rotative 11 porte un disque de frein 25 qui est fixé à proximité immédiate des rouleaux 7a, 7b et de la bande 22 de repérage de la position. Le disque de frein 25, d'un type connu quelconque, est adapté à coopérer avec des mâchoires de frein, schématisées en 26, portées par la bague fixe 9 et/ou le bâti structurel 13.

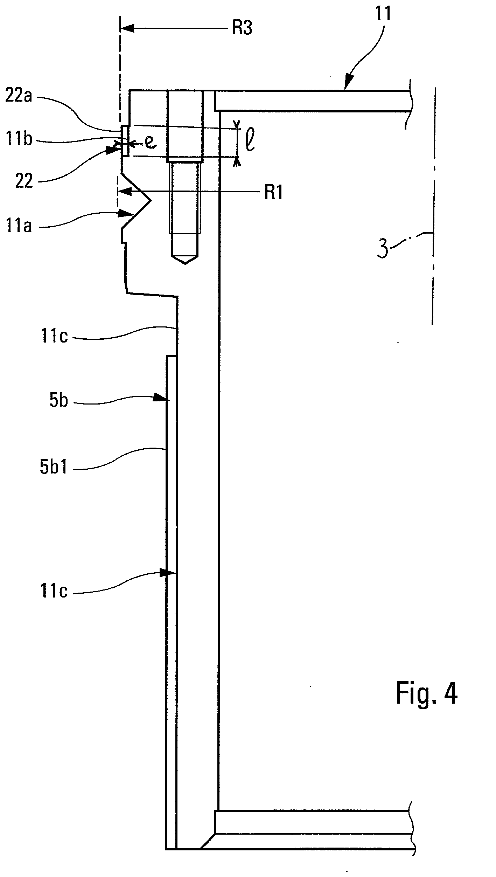

On notera encore, notamment à partir de la fig.4, que la bande 22 de repérage de position présente une épaisseur (e), perpendiculairement à l'axe 3 de rotation de la couronne, et une longueur (l), parallèlement à cet axe. On conseille que l'épaisseur de la bande 22 soit inférieure à sa longueur.

Ceci est favorable à la compacité et donc à la précision globalement recherchée.

On a ainsi décrit une structure de couronne d'orientation simple et économique, de dimensions limitées, permettant de répondre efficacement aux exigences les plus sévères des utilisateurs d'une telle couronne, en matière de précision et de répétitivité de positionnement de la bague rotative comme en matière de vitesse et d'accélération de rotation.

La présente invention n'est pas limitée au mode de réalisation que l'on vient de décrire, et on peut effectuer sur celui-ci de nombreux changements et modifications, notamment au niveau du diamètre et de la hauteur, sans sortir du domaine de l'invention, si l'on demeure dans la limite des revendications.

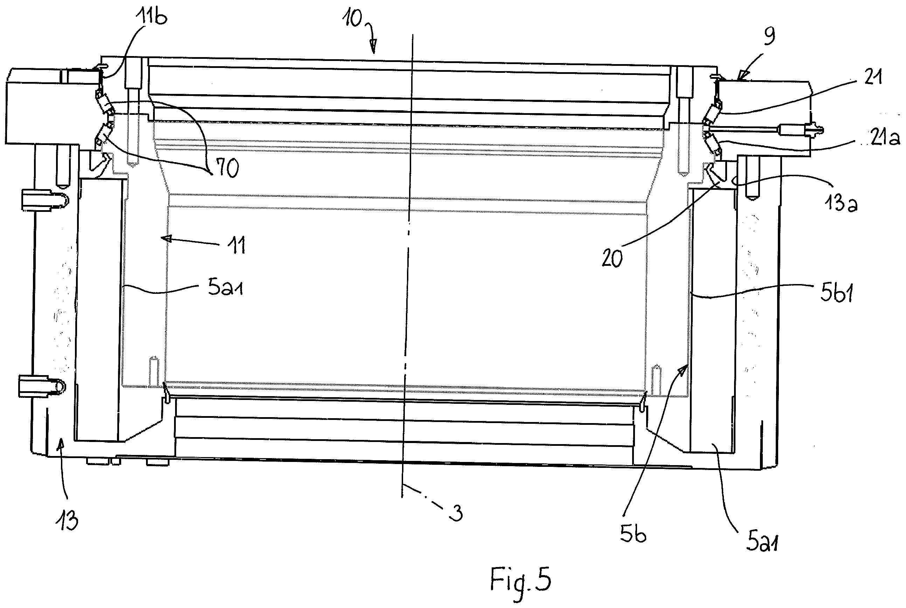

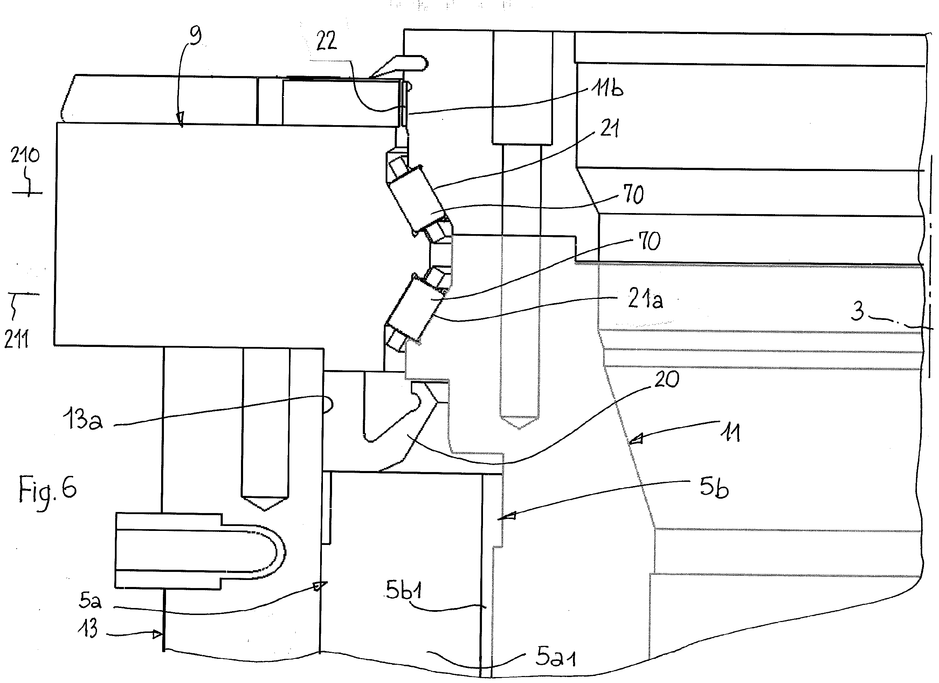

Ainsi par exemple voit-on figures 5 et 6 une alternative de réalisation où l'on retrouve identiquement repéré(e)s nombre de pièces ou organes déjà cité(e)s.

Dans cette réalisation, la couronne d'orientation à moteur intégré, 10, comprend deux chemins, ou pistes, contigü(e)s 21,21a pour deux rangées de galets ou roulements 70. Ainsi, les éléments roulants 70 sont disposés annulairement (plans 210,211 perpendiculaires à l'axe 3 de rotation de la couronne) en deux rangées suivant ces deux pistes contigües. Et la bande 22 de repérage de position angulaire est située, parallèlement audit axe 3, d'un côté de ces deux pistes -donc des deux rangées- considérées ensemble, les aimants 5b1 du rotor 5b étant disposés de l'autre côté de ces deux pistes et rangées.

On notera également figs.5, 6 l'axe d'inclinaison, ici de l'ordre de 30° par rapport à l'axe de rotation 3, de tous les galets de chacune des deux rangées 21,21a.

Deux à deux, un galet de la rangée supérieure 21 et un galet de la rangée inférieure définissent un « V », comme illustré.

Chaque galet 70 de l'une de ces rangées (ici la rangée supérieure 21) présentent une extrémité supérieure radialement plus éloignée de l'axe 3 que ne l'est son extrémité inférieure, et inversement pour les galets de l'autre rangée (ici la rangée inférieure 21a).

Le caractère proche, adjacent, des deux pistes 21, 21a est important. On peut ici se dispenser de la disposition des figures précédentes où les galets étaient alternativement suivant des directions d'inclinaison (70a, 70b ; fig.3) sensiblement opposées deux à deux par rapport à la direction de l'axe 3.

Par contre, on conseille toujours des rouleaux 70 à contact oblique.

A noter également que la troisième zone périphérique usinée 11c mentionnée plus haut (et qui peut être prévue figs.5, 6) peut ou non être prévue en combinaison avec les dites première et seconde zones 11a, 11b. Réalisée, une telle troisième zone 11c recevra donc le (ou définira un) support pour les aimants 5b1. Favorablement, ces aimants seront fixés directement sur cette troisième zone qui sera alors agencée en conséquence.

Par ailleurs, il peut se trouver, même si ceci n'est pas conseillé, que le support pour la bande de repérage de position 22 ne soit pas fixée directement sur à la seconde zone 11b.

De ce qui précède, on aura compris qu'il est a priori important que la (ou une) bande de repérage 22 soit disposée à proximité immédiate du (ou de plusieurs) chemin (s) de roulement pour les éléments roulants, ces chemins (souvent appelés pistes) devant être contigus ou du moins adjacents (proches) si ceux-ci sont plusieurs.

Eventuellement la ladite troisième zone périphérique (localisation en 11c sur les figures) pourrait recevoir un support pour les aimants appartenant à la partie de rotor du moteur. La solution illustrée avec précision des tolérances et fixation directe parait malgré tout préférable.

A noter également qu'un autre aspect inventif présent ici doit être considéré comme pouvant exister seul, indépendamment de ce qui précède ; il s'agit du fait que la(une) bande de repérage de position angulaire, telle que la bande 22, soit située, parallèlement à l'axe 3 de rotation de la couronne, d'un côté du (ou des) chemin(s) de roulement (adjacents s'ils sont plusieurs), les aimants (tels que 5b1) du rotor (tel que 5b) étant disposés de l'autre côté de ce (ou ces) chemin(s). Il est entendu que ceci demeure compatible notamment avec le fait que la bande de repérage soit disposée à proximité immédiate des éléments roulants, donc de leur(s) chemin(s) de roulement.

Il pourrait en être de même pour les considérations selon lesquelles :
- la bande 22 de repérage de position est fixée directement sur ladite seconde zone,
- et/ou la bague rotative 11 présente une troisième zone périphérique usinée 11c agencée de manière telle qu'elle définit elle-même un support pour des aimants (tels 5b1) appartenant à la partie de rotor (telle 5b) du moteur et qui sont fixés directement sur cette troisième zone.

## Revendications

1. Couronne d'orientation (1) à moteur de rotation intégré, comprenant deux bagues (9, 11) montées en rotation l'une par rapport à l'autre par l'intermédiaire d'éléments roulants disposés annulairement autour de l'axe de rotation (3) de la couronne, et un moteur (5) de rotation comprenant une partie de stator (5a) fixée à l'une des bagues (9), qui est fixe, et une partie de rotor (5b) fixée à l'autre bague (11), qui est rotative, cette bague rotative (11) présentant au moins une première zone périphérique usinée (11a) définissant un chemin de roulement pour des éléments roulants (7,70) et disposés selon un rayon moyen (R1) autour de l'axe (3), une seconde zone périphérique usinée (11b) recevant un support de moyens de repérage de la position angulaire de la bague rotative (11) par rapport à la bague fixe (9), lesdits moyens étant adaptés à coopérer avec des moyens de repérage complémentaires portés par la bague fixe (9), la seconde zone périphérique (11b) étant agencée de façon telle qu'elle définit un support pour une bande (22) de repérage de position qui est fixée à ladite seconde zone, **caractérisée en ce que** la bande de repérage (22) est disposée axialement adjacente vis-à-vis des éléments roulants (7,70)et que la bande de repérage (22) est disposée de façon telle que sa surface périphérique (22a) en regard du capteur de position (23) a un rayon (R3) sensiblement égal au rayon moyen (R1) des éléments roulants (7,70).

2. Couronne selon la revendication 1, **caractérisée en ce que** la bague rotative (11) présente une troisième zone périphérique usinée (11c) agencée de manière telle qu'elle définit un support pour des aimants (5b1) appartenant à la partie de rotor (5b) du moteur et qui sont fixés directement sur cette troisième zone.

3. Couronne selon la revendication 1 ou 2, **caractérisée en ce que** la bande (22) de repérage de position est fixée directement sur ladite seconde zone.

4. Couronne selon l'une des revendications précédentes, **caractérisée en ce que** les éléments roulants (7) sont disposés annulairement suivant une seule rangée, et **en ce que** la bande (22) de repérage de position angulaire est située, parallèlement à l'axe (3) de rotation de la couronne, d'un côté de la rangée d'éléments roulants (7), les aimants (5b1) du rotor (5b) étant disposés de l'autre côté de ladite rangée.

5. Couronne selon l'une des revendications 1 à 3, **caractérisée en ce que** les éléments roulants (70) sont disposés annulairement suivant deux rangées (21,21a), et **en ce que** la bande (22) de repérage de position angulaire est située, parallèlement à l'axe (3) de rotation de la couronne, d'un côté de ces deux rangées d'éléments roulants (70) considérés ensemble, les aimants (5b1) du rotor (5b) étant disposés de l'autre côté de ces deux rangées.

6. Couronne selon la revendication 5, **caractérisée en ce que** chaque élément roulant (70) de la rangée supérieure (21) présente une extrémité supérieure radialement plus éloignée de l'axe (3) de rotation de la couronne que ne l'est son extrémité inférieure, et inversement pour les éléments roulants de la rangée inférieure (21a).

7. Couronne selon l'une des revendications 1 à 4, **caractérisée en ce que** les éléments roulants comprennent des rouleaux (7a,7b) à contact oblique disposés alternativement suivant des directions d'inclinaison (70a, 70b) sensiblement opposées par rapport à la direction de l'axe (3) de la couronne.

8. Couronne selon l'une des revendications précédentes, **caractérisée en ce que** les parties de rotor (5b) et de stator (5a) du moteur (5) de rotation présentent une direction d'allongement (50) parallèle à l'axe (3) de rotation de la couronne, et les enroulements (5a1) de la partie de stator sont disposés selon un rayon moyen (R2) proche de celui (R1) des éléments roulants (7,70) de la couronne d'orientation.

9. Couronne selon l'une des revendications précédentes, **caractérisée en ce qu'**elle comprend en outre un bâti structurel (13) sur lequel sont fixées respectivement la partie de stator (5a) du moteur (5) et la bague fixe (9), ce bâti structurel (13) comportant un circuit interne de refroidissement (15) adapté à recevoir un fluide de refroidissement, et étant réalisé en un métal ou alliage bon conducteur de la chaleur.

10. Couronne selon l'une des revendications précédentes, **caractérisée en ce que** la bague rotative (11) à laquelle est fixée la partie de rotor (5b) porte un disque (25) de frein (24) adapté à coopérer avec des mâchoires (26) de frein portées par la bague fixe (9), la bande (22) de repérage de position angulaire étant située entre le disque (25) de frein et la rangée d'éléments roulants (7).

11. Couronne selon l'une des revendications précédentes, **caractérisée en ce que** la bande (22) de repérage de position présente une épaisseur, perpendiculairement à l'axe (3) de rotation de la couronne, et une longueur, parallèlement à cet axe (3), l'épaisseur de ladite bande (22) étant inférieure à sa longueur.

## Patentansprüche

1. Drehkranz (1) mit integriertem Rotationsmotor, umfassend zwei Ringe (9, 11), die über Wälzelemente, die ringförmig um die Rotationsachse (3) des Kranzes angeordnet sind, zueinander rotierend montiert sind, und einen Rotationsmotor (5), der einen Statorabschnitt (5a) umfasst, der an dem einen der Ringe (9) fixiert ist, der fix ist, und einen Rotorabschnitt (5b), der an dem anderen Ring (11) fixiert ist, der rotierend ist, wobei dieser rotierende Ring (11) mindestens eine erste bearbeitete Umfangszone (11a) aufweist, die eine Rollenbahn für Wälzelemente (7, 70) definiert, und in einem durchschnittlichen Radius (R1) um die Achse (3) angeordnet sind, eine zweite bearbeitete Umfangszone (11b), die eine Halterung für Markiermittel der Winkelposition des rotierenden Rings (11) im Verhältnis zum fixen Ring (9) aufnimmt, wobei die Mittel angepasst sind, um mit ergänzenden Markiermitteln zusammenzuwirken, die von dem fixen Ring (9) getragen werden, wobei die zweite Umfangszone (11b) derart angeordnet ist, dass sie eine Halterung für ein Band (22) zur Positionsmarkierung definiert, das in der zweiten Zone fixiert ist, **dadurch gekennzeichnet, dass** das Markierband (22) axial angrenzend gegnüber den Wälzelementen (7, 70) angeordnet ist und das Markierband (22) derart angeordnet ist, dass seine Umfangsoberfläche (22a) auf Höhe des Positionssensors (23) einen Radius (R3) aufweist, der im Wesentlichen gleich dem durchschnittlichen Radius (R1) der Wälzelemente (7, 70) ist.

2. Kranz nach Anspruch 1, **dadurch gekennzeichnet, dass** der rotierende Ring (11) eine dritte bearbeitete Umfangszone (11c) aufweist, die derart angeordnet ist, dass sie eine Halterung für Magneten (5b1) definiert, die dem Rotorabschnitt (5b) des Motors angehören und die direkt in dieser dritten Zone fixiert sind.

3. Kranz nach Anspruch 1 oder 2, **dadurch gekennzeichnet, dass** das Band (22) zur Positionsmarkierung direkt in der zweiten Zone fixiert ist.

4. Kranz nach einem der vorstehenden Ansprüche, **dadurch gekennzeichnet, dass** die Wälzelemente (7) ringförmig in einer einzigen Reihe angaordnet sind, und dadurch, dass sich das Band (22) zum Markieren der Winkelposition, parallel zur Rotationsachse (3) des Kranzes, auf einer Seite der Reihe von Wälzelementen (7) befindet, wobei die Magneten (5b1) des Rotors (5b) auf der anderen Seite der Reihe angeordnet sind.

5. Kranz nach einem der Ansprüche 1 bis 3, **dadurch gekennzeichnet, dass** die Wälzelemente (70) ringförmig in zwei Reihen (21, 21a) angeordnet sind, und dadurch, dass sich das Band (22) zum Markieren der Winkelposition, parallel zur Rotationsachse (3) des Kranzes, auf einer Seite dieser beiden Reihen von Wälzelementen (70) befindet, die als zusammen angenommen werden, wobei die Magneten (5b1) des Rotors (5b) auf der anderen Seite dieser beiden Reihen angeordnet sind.

6. Kranz nach Anspruch 5, **dadurch gekennzeichnet, dass** jedes Wälzelement (70) der oberen Reihe (21) ein oberes Ende aufweist, das radial weiter von der Rotationsachse (3) des Kranzes entfernt ist, als es das untere Ende ist, und umgekehrt für die Wälzelemente der unteren Reihe (21a).

7. Kranz nach einem der Ansprüche 1 bis 4, **dadurch gekennzeichnet, dass** die Wälzelemente Schrägwalzen (7a, 7b) umfassen, die abwechselnd in Neigungsrichtungen (70a, 70b) angeordnet sind, die im Wesentlichen im Verhältnis zur Achse (3) des Kranzes entgegengesetzt sind.

8. Kranz nach einem der vorstehenden Ansprüche, **dadurch gekennzeichnet, dass** die Rotor- (5b) und Statorabschnitte (5a) des Rotationsmotors (5) eine Ausdehnungsrichtung (50) parallel zur Rotationsachse (3) des Kranzes aufweisen und die Wicklungen (5a1) des Statorabschnitts in einem durchschnittlichen Radius (R2) nahe jenem (R1) der Wälzelemente (7, 70) des Drehkranzes angeordnet sind.

9. Kranz nach einem der vorstehenden Ansprüche, **dadurch gekennzeichnet, dass** er weiter ein Strukturgestell (13) umfasst, an dem jeweils der Statorabschnitt (5a) des Motors (5) und der fixe Ring (9) fixiert sind, wobei dieses Strukturgestell (13) einen internen Kühlkreislauf (15) beinhaltet, der angepasst ist, eine Kühlflüssigkeit aufzunehmen, und aus einem Metall oder einer Legierung gefertigt ist, das oder die ein guter Wärmeleiter ist.

10. Kranz nach einem der vorstehenden Ansprüche, **dadurch gekennzeichnet, dass** der rotierende Ring (11), an dem der Rotorabschnitt (5b) fixiert ist, eine Scheibe (25) zum Bremsen (24) trägt, die angepasst ist, mit Bremsbacken (26) zusammenzuwirken, die von dem fixen Ring (9) getragen werden, wobei sich das Band (22) zum Markieren der Winkelposition zwischen der Scheibe (25) zum Bremsen und der Reihe von Wälzelementen (7) befindet.

11. Kranz nach einem der vorstehenden Ansprüche, **dadurch gekennzeichnet, dass** das Band (22) zur Positionsmarkierung eine Dicke senkrecht zur Rotationsachse (3) des Kranzes, und eine Länge parallel zu dieser Achse (3) aufweist, wobei die Dicke des Bandes (22) kleiner als seine Länge ist.

## Claims

1. Slewing bearing (1) having an integrated rotation motor, comprising two rings (9, 11) rotatably mounted with respect to one another via rolling elements disposed annularly around the axis of rotation (3) of the bearing, and a rotation motor (5) comprising a stator portion (5a) fastened to one of the rings (9), which is stationary, and a rotor portion (5b) fastened to the other ring (11), which is rotary, this rotary ring (11) having at least one first machined peripheral zone (11a) defining a rolling path for the rolling elements (7,70) and disposed according to an average radius (R1) around the axis (3), a second machined peripheral zone (11b) receiving a support for means for tracking the angular position of the rotary ring (11) with respect to the stationary ring (9), said means being adapted to cooperate with complementary tracking means carried by the stationary ring (9), the second peripheral zone (11b) being arranged in such a way that it defines a support for a strip (22) for tracking position that is fastened to said second zone, **characterised in that** the tracking strip (22) is disposed axially adjacent with respect to the rolling elements (7,70)and that the tracking strip (22) is disposed in such a way that its peripheral surface (22a) facing the position sensor (23) has a radius (R3) substantially equal to the average radius (R1) of the rolling elements (7,70).

2. Bearing according to claim 1, **characterised in that** the rotary ring (11) has a third machined peripheral zone (11c) arranged in such a way that it defines a support for magnets (5b1) belonging to the rotor portion (5b) of the motor and which are fastened directly onto this third zone.

3. Bearing according to claim 1 or 2, **characterised in that** the strip (22) for tracking position is fastened directly onto said second zone.

4. Bearing according to one of the preceding claims, **characterised in that** the rolling elements (7) are disposed annularly in a single row, and **in that** the strip (22) for tracking angular position is located, in parallel to the axis (3) of rotation of the bearing, on one side of the row of rolling elements (7), the magnets (5b1) of the rotor (5b) being disposed on the other side of said row.

5. Bearing according to one of claims 1 to 3, **characterised in that** the rolling elements (70) are disposed annularly in two rows (21,21a), and **in that** the strip (22) for tracking angular position is located, in parallel to the axis (3) of rotation of the bearing, on one side of these two rows of rolling elements (70) taken together, the magnets (5b1) of the rotor (5b) being disposed on the other side of these two rows.

6. Bearing according to claim 5, **characterised in that** each rolling element (70) of the upper row (21) has an upper end radially farther from the axis (3) of rotation of the bearing than its lower end, and inversely for the rolling elements of the lower row (21a).

7. Bearing according to one of claims 1 to 4, **characterised in that** the rolling elements comprise rollers (7a,7b) having oblique contact disposed alternatingly according to directions of inclination (70a, 70b) substantially opposite with respect to the direction of the axis (3) of the bearing.

8. Bearing according to one of the preceding claims, **characterised in that** the rotor (5b) and stator (5a) portions of the rotation motor (5) have a direction of extension (50) parallel to the axis (3) of rotation of the bearing, and the windings (5a1) of the stator portion are disposed according to an average radius (R2) close to that (R1) of the rolling elements (7,70) of the slewing bearing.

9. Bearing according to one of the preceding claims, **characterised in that** it further comprises a structural frame (13) onto which the stator portion (5a) of the motor (5) and the stationary ring (9) are respectively fastened, this structural frame (13) comprising an internal cooling circuit (15) adapted to receive a cooling fluid, and being made from a metal or alloy that is a good conductor of heat.

10. Bearing according to one of the preceding claims, **characterised in that** the rotary ring (11) to which the rotor portion (5b) is fastened carries a brake (24) disc (25) adapted to cooperate with brake jaws (26) carried by the stationary ring (9), the strip (22) for tracking angular position being located between the brake disc (25) and the row of rolling elements (7).

11. Bearing according to one of the preceding claims, **characterised in that** the strip (22) for tracking position has a thickness, perpendicularly to the axis (3) of rotation of the bearing, and a length, in parallel to this axis (3), the thickness of said strip (22) being less than its length.
